# EUROPEAN PATENT APPLICATION

(11) **EP 2 554 226 A2**
(43) Date of publication of application: **06.02.2013**
(21) Application number: 12179428.3
(22) Date of filing: 06.08.2012
(51) Int. Cl.: A63F 13/10, A63F 13/12

(54) **Conducting market research using social network games**

(30) Priority: 05.08.2011 US 201113204500; 05.08.2011 US 201113204519
(71) Applicant: Disney Enterprises, Inc., Burbank, CA 91521 (US)
(72) Inventor: Brown, Amber R. A., Burbank, CA California 91521 (US); Marks, Joseph W., Burbank, CA California 91521 (US)
(74) Representative: Round, Edward Mark

(57) **Abstract**

Techniques are described for conducting market research via interactive game play mechanics. A game platform may allow a market research sponsor to create and publish online games which can identify latent consumer sentiment (and other market research data), while simultaneously providing an entertaining and engaging experience for the game participants. The games may be tailored such that elements of game play elicit responses from participants that reveal the desired market research data, e.g., consumer product awareness, consumer sentiment, brand preferences, loyalty, trends in awareness and sentiment, *etc*. Providing an engaging online experience provides an element of situational distraction, leading to more authentic responses from the participants as well as greater participation rates.

## Description

### TECHNICAL FIELD

Embodiments presented in this disclosure generally relate to techniques for gathering market research data. More specifically, embodiments presented herein relate to techniques for conducting market research using social network games.

### BACKGROUND

Business frequently engage in market research to evaluate a variety of business interests, such as consumer product awareness, consumer sentiment, brand preferences, loyalty, trends in awareness and sentiment, *etc*. For example, businesses often send surveys to groups of customers (selected randomly, or according to some demographic profile). Such surveys can be sent via the mail, but more and more such surveys are presented to users engaging in online transactions. For example, a user purchasing items online may be asked to participate in a survey to provide feedback regarding the online process as well as asked to answer other questions regarding consumer sentiment. Other approaches for conducting market research include telephone surveys as well as recruiting individuals to participate in a focus group.

However, surveys are an awkward, and frequently expensive, way of acquiring market research data, which often produces poor results. For example, producing a statistically valid result requires a large number of responses (1000-2000 or more), and vendors often charge a variable rate based on sample size, making large (better) samples prohibitively expensive in many cases. Further, a large consumer survey is difficult to deploy quickly and slow to generate results.

Further still, consumer surveys and focus groups often fail to provide an accurate measure of consumer opinion regarding fashions, trends, movies, celebrities, politics and societal and economic issues in general. For example, a persons' self-reporting may not always reflect their choices in reality. That is, these approaches may not accurately expose latent preferences that drive consumer decision making.

But perhaps the most significant drawback to relying on conventional surveys and focus groups to gather effective market research data is simply that it is difficult to find participants. Many people are simply unwilling to participate in market research (*e.g.,* email messages or dialogs on a website are often disregarded by consumers) and many people feel uncomfortable providing personally identifying or demographic information online. As a consequence, relying solely on the cohort of people who are willing to participate in a direct consumer survey often skews the results. Lastly, a business may be too aggressive in trying to attract participants for market research surveys, and doing so may itself damage a business' brand. For example, if every time a user visits a website they receive multiple prompts to participate in a consumer survey, some consumers may simply avoid that website or develop negative opinions about such a business.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.

Figure 1 illustrates an example computing infrastructure used to conduct market research using social games, according to one embodiment of the invention.

Figure 2 provides a logical view of a game platform for conducting market research using social games, according to one embodiment of the invention.

Figure 3 illustrates an example workflow for conducting market research using social games, according to one embodiment of the invention.

Figure 4 illustrates an example of a computing system used to create social network games configured to collect desired market research from game participants, according to one embodiment of the invention.

Figure 5 illustrates an example computing system used to play social network games configured to provide game play events useful for deriving market research data as part of game play, according to one embodiment of the invention.

Figure 6 illustrates a method for generating a social network game configured to collect desired market research from game participants, according to one embodiment of the invention.

Figure 7 illustrates an example of an interface used to customize a social network game template, according to one embodiment of the invention.

Figure 8 illustrates a method for gathering market research data from game participants, according to one embodiment of the invention.

Figures 9A-9C illustrate an example social game configured to gather both demographic and consumer preference data from game participants, according to one embodiment of the invention.

Figures 10A-10B illustrate an example social game configured to gather consumer preference, trending, and sentiment data from game participants, according to one embodiment of the invention.

Figures 11A-11B illustrate an example social game configured to gather market research data regarding consumer sentiment, according to one embodiment of the invention.

Figure 12 illustrates an example of an interface used to gather market research data from game participants, according to one embodiment of the invention.

### DESCRIPTION

### OVERVIEW

One embodiment of the invention includes a method for generating playable games used to obtain market research data. This method may generally include receiving a selection of a game type to use in conducting market research and receiving a set of data used to customize the selected game type in order to conduct market research for a market research topic identified in the received set of data. This method may also include generating, from the received data, a playable game of the selected game type. The game type includes one or more game play elements configured to elicit game play events relevant to the market research data from one or more game participants during game play. This method also includes publishing the playable game to a network accessible location. For example, the game may be published on a social network website or as an "app" downloaded to a mobile phone or tablet computer.

In a particular embodiment, this method may further include evaluating the relevant game play events elicited during game play to derive at least one of a measure of consumer product awareness, consumer sentiment, brand preferences, loyalty and trends for the market research topic identified in the received set of data, purchasing behavior and purchasing intent.

In another embodiment, this method may further include receiving, from at least a first participant, a request to play the playable game, providing to the first participant, an instance of the playable game, recording game play events elicited during game play relevant to the market research data, and interpreting the recorded game play events play events to derive the market research data.

Another embodiment of the invention includes a method of conducting market research via a game played by a group of game participants. This method may generally include receiving, from a first participant of the group, a request to play the game. The game presents the first participant with at least two alternatives and game play includes the first participant indicating a preferred one of the two or more alternatives and a prediction of a percentage of participants that will chose each alternative. This method may further include generating an instance of the game. The alternatives are selected for the instance in order to elicit game play events relevant to the market research data during game play based on the alternatives selected by the first participant and based on the predicted percentages. This method may further include providing, to the first participant, the instance of the game and recording the game play events relevant to the market research data elicited from the first participant during game play.

Another embodiment includes a method for obtaining market research data via a game played by a group of game participants. This method may generally include receiving, from at least a first participant of the group, a request to play the game. And in response, generating an instance of the game, wherein the instance includes at least a first interface and a second interface and wherein the instance of the game is configured to elicit game play events relevant to the market research data during game play from the first and second participants. This method may further include outputting the first interface for display to the first participant and outputting the second interface for display to the second participant. The first interface itself may include an indication of a game subject for the game instance, a plurality of keywords representing concepts and descriptors, and a control element which allows the first participant to share selected keywords, of the plurality, with the second participant. The second interface may include a panel used to display the selected keywords shared by the first participant and a control element which allows the second participant to guess the game subject. During game play, the selected keywords shared by the first participant and one or more guesses of the game subject made by the second participant are recorded.

Other embodiments include, without limitation, a computer-readable medium that includes instructions that enable a processing unit to implement one or more aspects of the disclosed methods as well as a system configured to implement one or more aspects of the disclosed methods.

### DESCRIPTION OF EXAMPLE EMBODIMENTS

Embodiments of the invention provide techniques for conducting market research using social network games. One embodiment provides a platform for creating and hosting online games which can identify latent consumer sentiment (and other market research data), while simultaneously providing an entertaining and engaging experience for the game participants. More generally, social network games may be tailored where elements of game play elicit responses from participants that reveal the desired market research data, *e.g.,* consumer product awareness, consumer sentiment, brand preferences, loyalty, trends in awareness and sentiment, *etc*. Providing an engaging online experience provides an element of situational distraction, leading to more authentic responses from the participants as well as greater participation rates. Further, by providing games through social network websites (and applications used to access such online social networks), participants may be recruited by the users of such networks, helping to alleviate one of the most difficult aspects of conducting market research - finding willing participants.

In one embodiment, a game platform provides an evolving suite of games, which may be repeatable for different market research tasks. That is, a game played once to identify consumer sentiment or awareness relative to one product may be replayed using different data to identify consumer sentiment or awareness of another product. Further, by having the same participant play one or more games repeatedly, a user demographic profile, *e.g.,* an expected predicted age, location, age-range, gender, and education level of the first participant, income, personality trait, or predicted behavior, *etc*., may be derived from the answers given by that participant. Additionally., a psychographic profile may be derived for a participant, *i*.*e*., profile of any attributes relating to personality, values, attitudes, interests, or lifestyles of a participant. Doing so allows game content to be targeted to groups of users having a desired demographic or psychographic attributes.

The game platform itself may be accessed from a variety of network-enabled devices, including computing devices with a web browser, *e.g.,* a desktop laptop, or tablet or mobile telephone. Similarly, custom applications may be executed on these and other devices (*e.g.,* game consoles, network capable music players *etc*.). Regardless of how a given user accesses a given game (or games), by creating an engaging experience, users are more likely to participate in games, resulting in statistically relevant amount of research data being collected at lower costs then possible with conventional survey or focus group approaches.

While the game platform described herein may support a broad variety of games, one example of a game configured to elicit consumer preferences (and general sentiment) is an online game which allows participants to select between at least two alternatives (usually two products) and then to guess what percentage of users will chose each alternative (revealing perceptions of consumer preferences). The user (or users) who correctly predicts the overall ratio could win the alternative they chose. When a given a user plays several iterations of this game, a profile of that participant can be developed, *e.g.,* by inferring gender, age, location, *etc*. Another example game would be one where users make predictions by answering questions. Each answer could be associated with a game token. The game tokens can then be played in a variety of games that follow familiar rules, *e.g.,* dominoes, gomoku, jenga, *etc*. When the predictions mature, tokens with correct predictions contribute positively to the score in each particular game. The points could be redeemed for product related to the game (or for other value).

Still another game could include one where participants are randomly matched with one another (or matched based on friendship status on a social network site or matched on demographic characteristics). Matched participants play a guessing game with one another where one is given a secret keyword (*e.g.,* a product name or move title) and set of descriptors with concepts related to the keyword. The first player selects what descriptors or concepts to reveal to the second player, who in turn attempts to guess the keyword. The descriptors and concepts selected by the first user (as well as the guesses made by the second user) are used to interpret of consumer opinion relative to a target product. Further, after completing a round of this game, the first and second user could interact via a chat room. In such a case, any conversation between the participants about the target product, or the concepts and descriptors, could be mined as a secondary source of market research data.

Another variation includes presenting the first user with a question related to a product (or brand or celebrity, *etc*.). The second user is then presented with the first user's answer to the question along with multiple possible products. The goal for the second user is to select the correct product, based on the first user's answer (or selection of descriptors or concepts). Again, doing so reveals valuable information regarding consumer sentiment and awareness of the target product. Still another variation includes a game where two participants are presented with a product (or brand or celebrity, *etc*.) and a common set of descriptors or concepts. Each user then selects a set number of the keywords, and each matching keyword results in points for the two users. Again, the points could be redeemed towards the products presented in the game (or for other value), giving participants a stronger incentive to play.

Of course, one of ordinary skill in the art will recognize that many games may be configured to elicit relevant game play events that may be interpreted to derive market research data for a brand, product, service, individual, *etc*., including games for a single participant, games for multiple participants, games which include cooperative or competitive game play aspects (or both). And further, that the games playable through the game platform described herein (and corresponding approaches for game play events relevant for market research) are not limited to the specific examples of social network games presented below.

Note, the following description is presented to enable one of ordinary skill in the art to make and use the proposed techniques. Descriptions of specific embodiments and applications are provided only as examples and various modifications will be readily apparent to those skilled in the art. The general principles described herein may be applied to other embodiments and applications without departing from the scope of the disclosure. Thus, the present disclosure is not to be limited to the embodiments shown, but is to be accorded the widest scope consistent with the principles and features described herein. For purpose of clarity, features relating to technical material that is known in the technical fields related to the proposed ideas are not been described in detail.

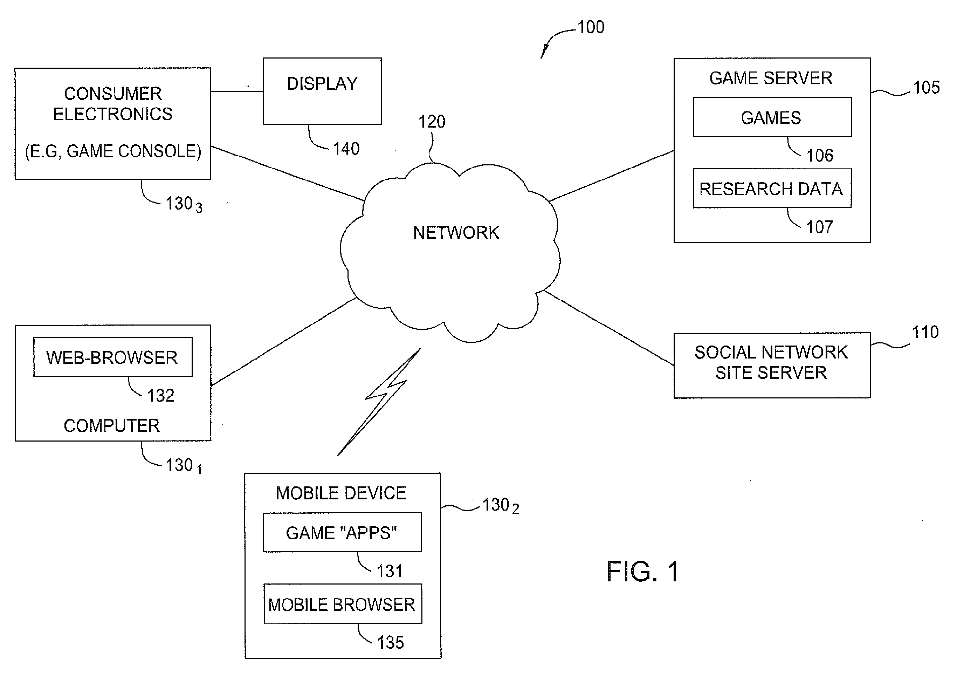

Figure 1 illustrates an example computing infrastructure 100 used to conduct market research using social games, according to one embodiment of the invention. As shown, the computing infrastructure 100 includes a game server 105, a social network site server 110, and client systems 130₁, 130₂ and 130₃, each connected to a communications network 120.

The client systems 130₁₋₂ communicate with the game server 105 over the network 120 to access games 106 hosted by the game server 105. Participating in the available games 105 elicits game play events used to derive market research data 107 from game participants, which may be evaluated to determine, *e.g.,* consumer product awareness, consumer sentiment, brand preferences, loyalty, and trends for the market research topic identified in the received set of data, purchasing behavior and purchasing intent, *etc*. Games 106 hosted by the game server 105 may also be accessed over a social network website (or application used to access such a site) hosted by the social network site server 110. For example, the game server could include a number of game templates, customized to conduct market research related to a specific product (or brand, service, concept, person, movie, television program, *etc*.). In such a case, the resulting games 106 could be published to the social network site (or other network accessible location), allowing members of that social network to access games 106, as well as recommend a given game to friends. As noted, doing so may be an effective approach for recruiting individuals to participate in market research, albeit doing so indirectly - by having users recommend (or invite) friends to play games 106 published from the game server 105. In each case, however, user game play elicits response relevant to the desired market research which may be communicated back to the game server 105 (or other computer system) for evaluation.

In this particular example, client system 130₁ represents a computer system running a web-browser 132. Accordingly, client system 130₁ is representative of desktop PCs, laptop computers, home-theater PCs (HTPCs), and other computing systems capable of running a web-browser. Similarly, client system 130₂ represents a mobile device such as a mobile telephone, tablet computer, portable MP3 player, *etc*. As shown, the mobile device 130₂ includes a mobile web-browser 135 as well as dedicated game "apps" 131.

In one embodiment, the games 106 are accessed using the web browser 132 or mobile browser 135, *e.g.,* by accessing the social network website hosted by server 110. Alternatively, games may be distributed as stand-alone application programs (or "apps" 131) executed on the mobile device 130₂. In such a case, a game "app" 131 could include the basic template for a given social network game and access new content each time a user desires to participate in game play. For example, a game "app" 131 could be configured to present a user with a new choice of alternative products every day, where the user specifies their own preference, as well as guesses what percentage of users will chose each alternative (revealing perceptions of consumer preferences). As the same user plays each day, a demographic profile or psychographic profile of that user may be derived from the daily selections. Further, changing the selections each day helps retain user interest, as does offering participants a chance to win their selected alternative by accurately predicting the overall percentages.

Consumer electronics device 130₃ represents a set-top device connected to both network 120 and a display 140 (*e.g.,* a flat-panel television). Accordingly, consumer electronics device 130₃ is representative of digital cable boxes, digital video recorder (DVR) systems, video game consoles, and other media devices capable of rendering web content or executing a game application. Further, display 140 may itself be an integrated device capable of connecting to the network 120 and rendering web content. For example, some flat-panel television displays include integrated applications that can connect to a social network site, stream media from video on demand services, *etc*. In each of these cases, a user interface presented by the consumer electronics device 130₃ may provide a mechanism for a user to participate in social network games configured to derive market research from elements of game play.

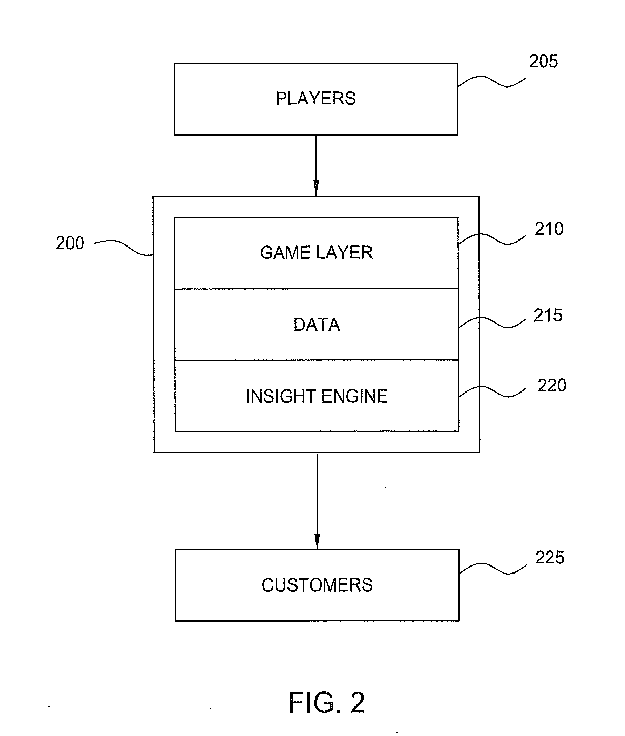

Figure 2 provides a logical view of a game platform 200 for conducting market research using social games, according to one embodiment of the invention. As shown, the game platform 200 includes a game layer 210, market research data 215 and an insight engine 220. As described, players 205 can access game layer 210 of the platform 200 via a web browser, mobile device, social network sites, *etc*., to access an evolving suite of repeatable games. That is, the game layer 210 exposes each game currently available for a player 205 to play. Data 215 corresponds to data collected, over time, at a participant-level, including a given users' product/brand choices/awareness/sentiment, *etc.,* revealed during game play. Data 215 also includes demographic predictions regarding a given participant, an identification of most insightful and/or relevant players, *etc*.,

The insight engine 220 provides a software application configured to identify sentiment, preference, awareness, and predicted outcomes. That is, the insight engine provides the analytics for the game platform 200 to interpret relevant game events that occur during game play to derive the desired market research data. The analytical findings may be distilled into actionable market research returned to customers 225, *e.g.,* business conducting market research to a brand, product, *etc*., via the games published to the game layer 210.

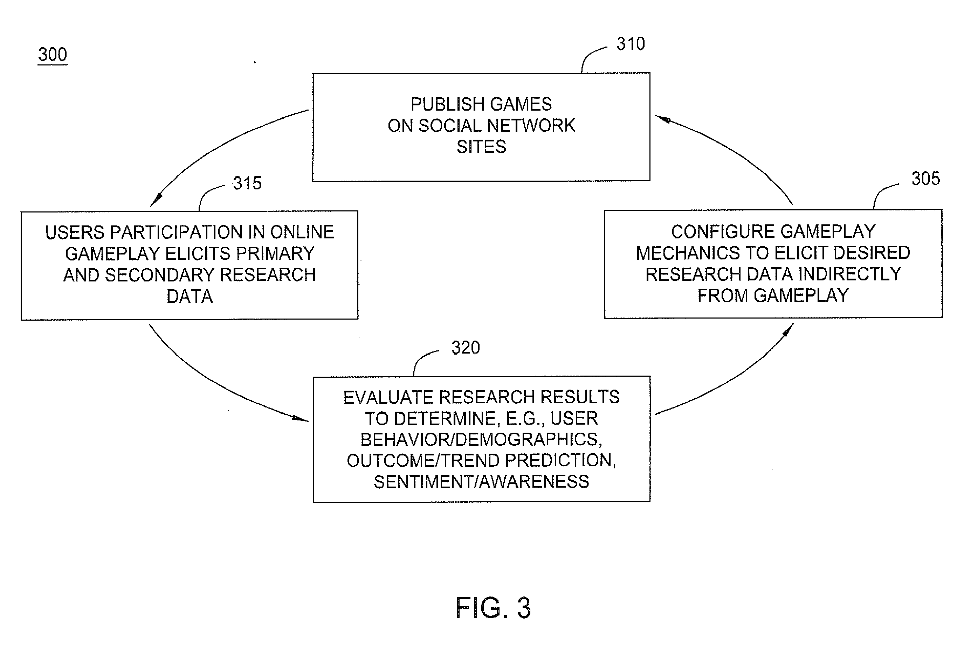

The general workflow for conducting market research via the game platform 200 is shown in Figure 3. As shown, the workflow 300 begins at 305, where the game play mechanics for a given game are configured. In one embodiment, the games themselves may be defined using a set of templates associated with a given game type, and a sponsor desiring to conduct market research supplies the appropriate information to customize the template into a playable game. For example, returning to the preferences game where a user expresses their preference between two alternatives, the sponsor would need to specify the particular alternatives to present to users.

Once the game data associated with a given game type is provided, at 310 the resulting game is published to a network accessible location, allowing users to participate in game play, as well as invite friends to participate. At 315, user participation in online game play may elicit both primary and secondary research data. Primary or "relevant" data generally includes any information or events reveled or occurring as part of game play (directly or indirectly) related to the market research topic (*e.g.,* consumer brand awareness or sentiment). And secondary data generally includes other information revealed by a participant related to the market research topic. For example, for games that include multiple participants, chat messages exchanged among game participants may include information useful to the market research topic.

At 320, the market research data revealed/elicited during game play, is evaluated to determine, *e.g.,* user preferences, demographics, outcome and trend prediction, sentiment, awareness, *etc*. Further, given the rapid response and potential large participation rates for a given game, the results learned from one game mechanic, can be used to design additional market research topics. For example, assume a motion picture studio is preparing to release an animated feature with a primary target audience of families and children. In such a case, the studio could identify from the results of one preferences test that pre-release marketing of the film had resulted in a consumer perception that the animated feature was primary a "girls" movie. In the appropriate case (*i*.*e*., depending on the actual content of the movie), the motion picture studio could engage in new advertising campaigns to change this perception (*e.g.,* by advertising aspects of the movie that would appeal more to boys). Further still, given the rapid development and deployment of games provided by the game platform, the impact of such a change in marketing could be determined in near-real time. More generally, the game platform 200 and workflow 300 may be used to evaluate trends in consumer sentiment over time, and allows a business to correlate different marketing campaigns with different audiences (demographic cohorts) over time.

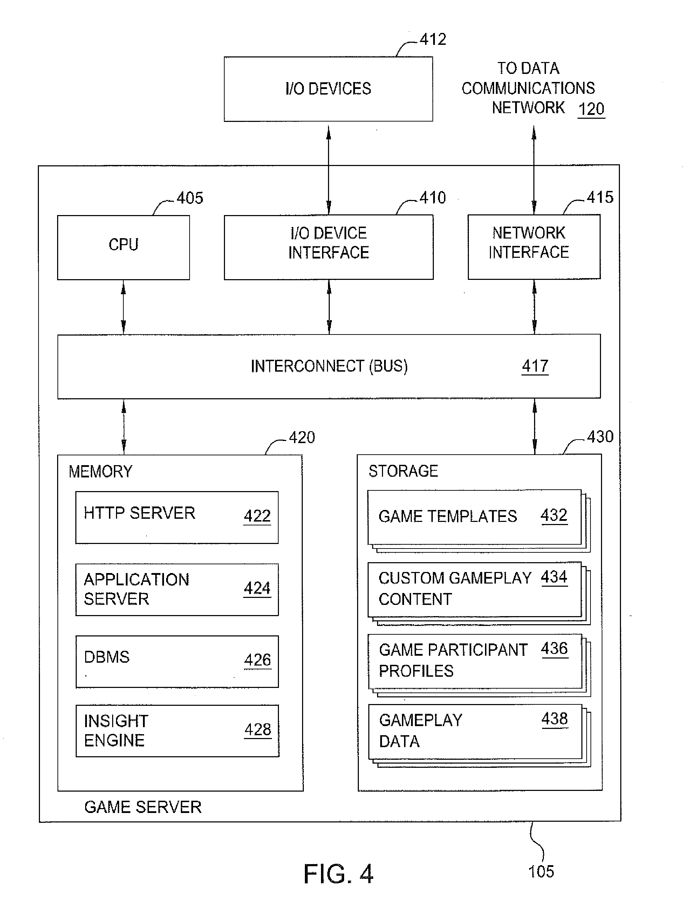

Figure 4 illustrates an example of a game server 105 used to create social network games configured to collect game play events useful for market research from game participants, according to one embodiment of the invention. As shown, the game server 105 includes, without limitation, a central processing unit (CPU) 405, a network interface 415, a bus 417, a memory 420, and storage 430. The game server 105 also includes an I/O device interface 410, connecting the game server 105 to I/OP devices 412 (*e.g.,* keyboard, display and mouse devices). As described, the game server 105 provides a computing system configured to transmit game content to a social network site (or to game participants directly).

CPU 405 retrieves and executes programming instructions stored in the memory 420. Similarly, CPU 405 stores and retrieves application data residing in the memory 420. The bus 417 is used to transmit programming instructions and application data between the CPU 405, I/O devices interface 410, storage 430, network interface 415 and memory 420. CPU 405 is included to be representative of a single CPU, multiple CPUs, a single CPU having multiple processing cores, and the like. And the memory 420 is generally included to be representative of a random access memory. The storage 430 may be a disk drive storage device. Although shown as a single unit, the storage 430 may be a combination of fixed and/or removable storage devices, such as magnetic disc drives, solid state drives (SSD), removable memory cards, optical storage, network attached storage (NAS), or a storage area-network (SAN).

Illustratively, the memory 420 includes a web-server 422, application server 424, and a database management system (DBMS) 426, collectively configured to respond to requests for web pages or for game content. Additionally, the memory 420 also includes an insight engine 428. As noted, the insight engine 428 provides a software application configured to identify sentiment, preference, awareness, predicted outcomes, *etc*., from market research data elicited, revealed, observed, or derived from game play. Of course, one of ordinary skill in the art will recognize that the insight engine 420 may be executed be on a separate computer system from the game server 105, and that the game server 105 itself is representative of multiple computer systems used to create games to publish to a network accessible location, *e.g.,* social network site (or to users), to load balance requests for game content, to store market research data generated as a result of game play, and to evaluate such market research data using the insight engine 428.

Illustratively, the storage 430 includes a collection of game templates 432, custom game play content 434, game participant profiles 436 and game play data 438. In one embodiment, each game template 438 corresponds to a game type or game mechanism that can be customized to identify consumer sentiment, awareness, trends, purchasing intent, *etc*., relative to a given brand, product, *etc*. Custom game content 434 generally corresponds to information used to tailor a game to a desired market research topic or subject prior to being published on a social network website (or made available to users via another network accessible location). Once a given game template is used to generate a game, and the resulting game is published, participants may begin playing that game. The game play events used to derive market research data is stored as game play data 438.

Similarly, the game participant profiles 436 provide demographic profiles or psychographic profiles (or both), corresponding to game participants generated, over time, as participants engage in game play. For example, in one embodiment, users access a social network site using a user name and password. In such a case, each time a given user accesses the social network site and participates in game play, responses elicited during game play can be correlated with statistical data to derive a predicted demographic profile of that user. Thereafter, where a market research sponsor desires to conduct market research data for a given demographic cohort, the game participant profiles 436 may be used to select participants that satisfy the desired characteristics. Note, doing so does not require any personally identifying information about game participants to be supplied directly. Instead the participant profiles 436 may be built-up over time as a given user plays multiple games. Of course, in one embodiment, the participant profile 436 may include information supplied by the user (*e.g.,* as part of a user profile associated with a given user name and password).

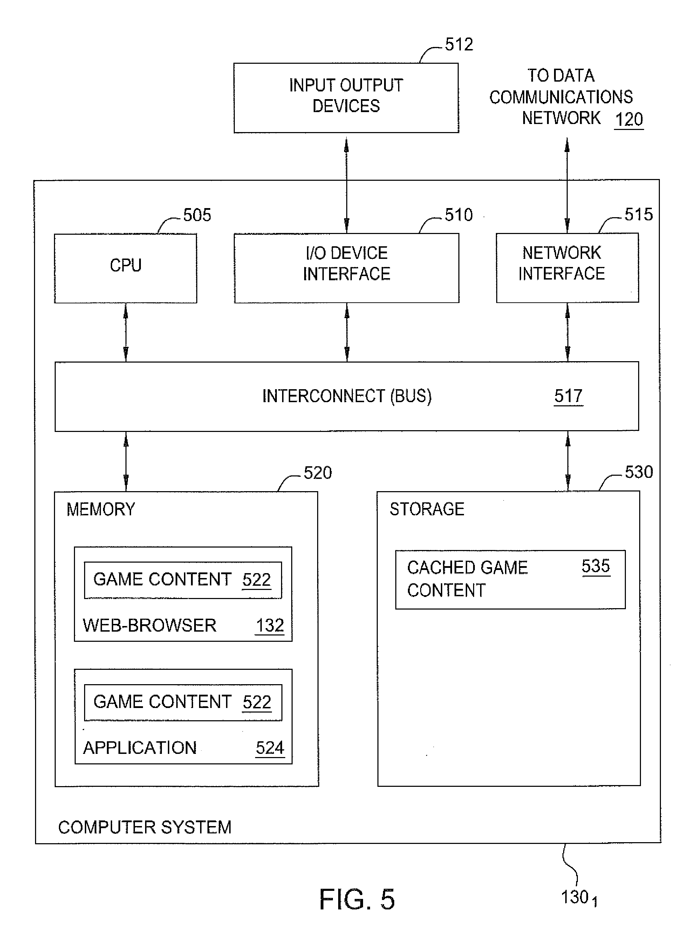

Figure 5 illustrates an example computing system used to play social network games configured to provide game play events useful for deriving market research data as part of game play, according to one embodiment of the invention. As shown, the client computing system 130₁ includes, without limitation, a central processing unit (CPU) 505, a network interface 515, a bus 517, a memory 520, and storage 530. The computing system 130₁ also includes an I/O device interface 510 connecting I/O devices 512 to the computing system 130₁ (e.g., a keyboard, mouse, or remote control, along with a monitor (*e.g.,* an LCD panel).

Like CPU 405, CPU 505 is included to be representative of a single CPU, multiple CPUs, a single CPU having multiple processing cores, *etc*., and the memory 520 is included to be representative of a random access memory. The bus 517 connects CPU 505, I/O devices interface 510, storage 530, network interface 515, and memory 520. The network interface 515 is configured to transmit data via the communications network 120, *e.g.,* to obtain games from the game server system 105. Storage 530, such as a hard disk drive or solid-state (SSD) storage drive, may store game data files along with other content.

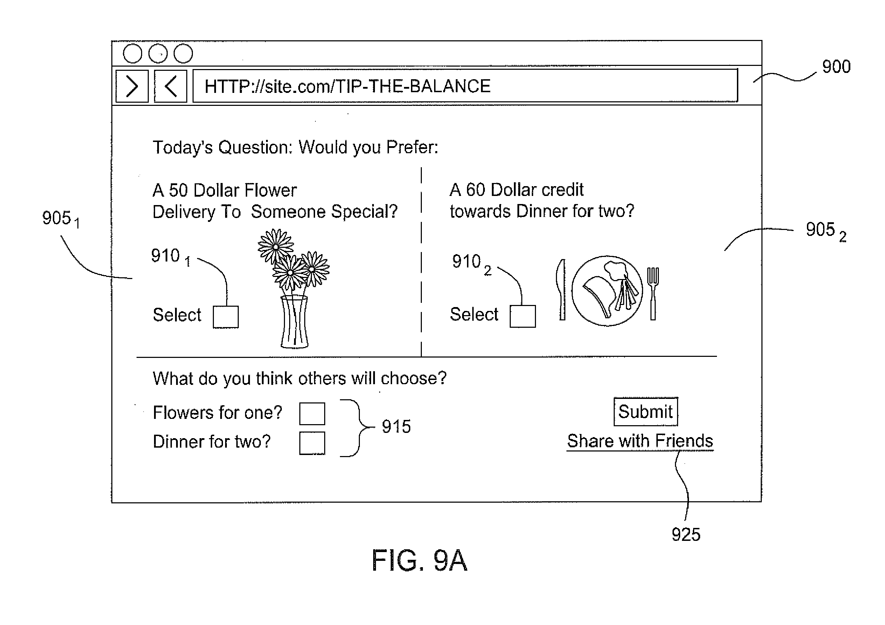

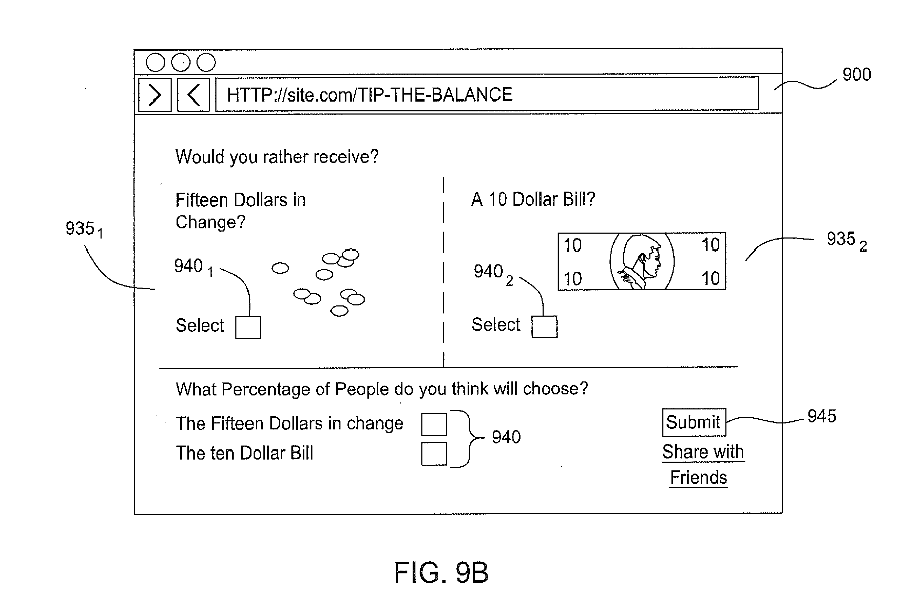

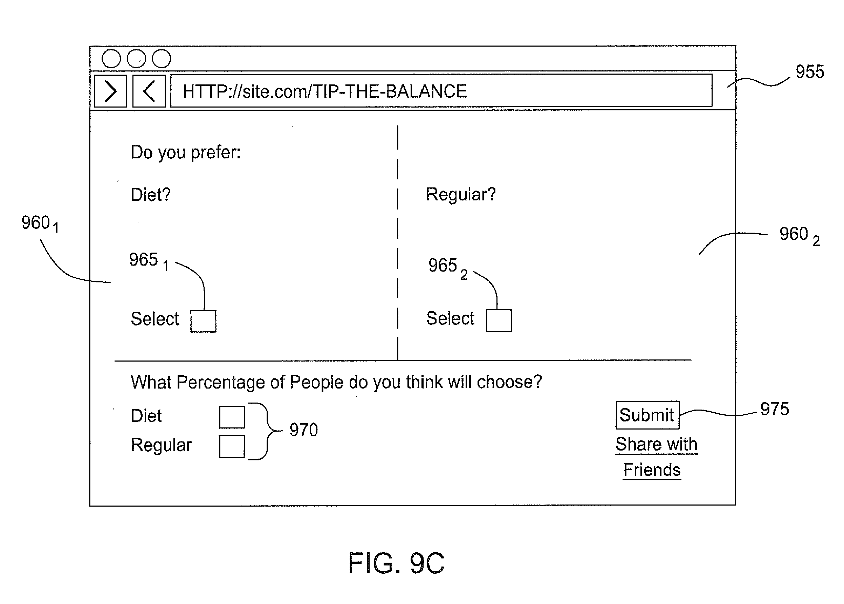

Illustratively, the memory 525 includes a web browser 132, which itself includes game content 522. The memory 520 also stores an application 522 which executes game content 522, outside of the context of a web browser. And storage 535 stores cached game content 535 and user configuration setting as needed to facilitate game play. As described above, the web browser 132 may access a social network site to obtain game content, allowing a user to participate in game play, as well as capture game play events based on the game play choices made by a participant. Figures 9 through 12, discussed below present, a variety of example games 522 rendered by a web browser 522.

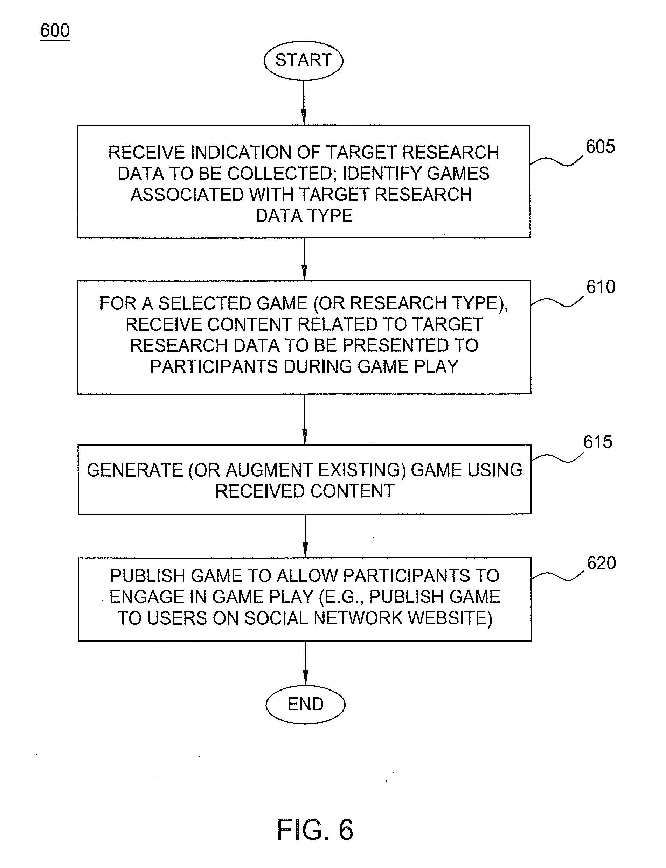

Figure 6 illustrates a method 600 for generating a social network game configured to collect desired game play events from game participants useful for market research, according to one embodiment of the invention. As shown, the method 600 begins at step 605, where a game server receives an indication of a target research data to be collected, and in response, identifies games, game types, or game mechanisms matching the requested game type (or matching the requested market research data type).

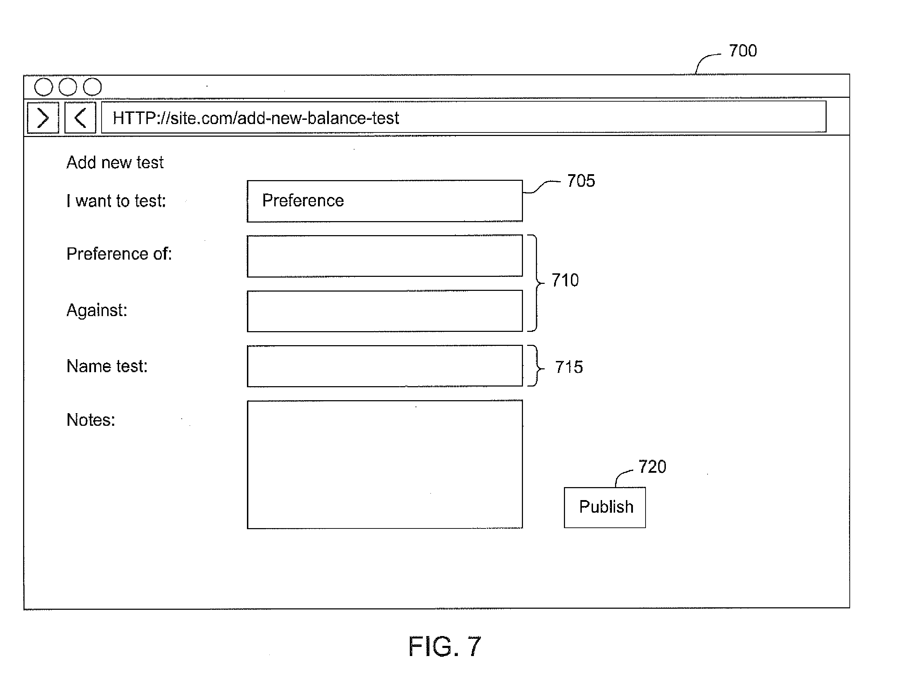

For example, Figure 7 illustrates an example of an interface 700 used to customize a social network game template, according to one embodiment of the invention. As shown, the interface 700 includes a section tool used to specify a type of market research to obtain via a social network game. In this particular example, a research type of "consumer preference" has been selected using selection list 705.

At step 610, the game server prompts a research sponsor to specify the content needed to create a social network game for the selected game template (or research type). At step 615, the game server generates a game using the information provided by a research sponsor. And at step 620, the sponsor publishes the game at a network accessible location to allow participants to engage in game play.

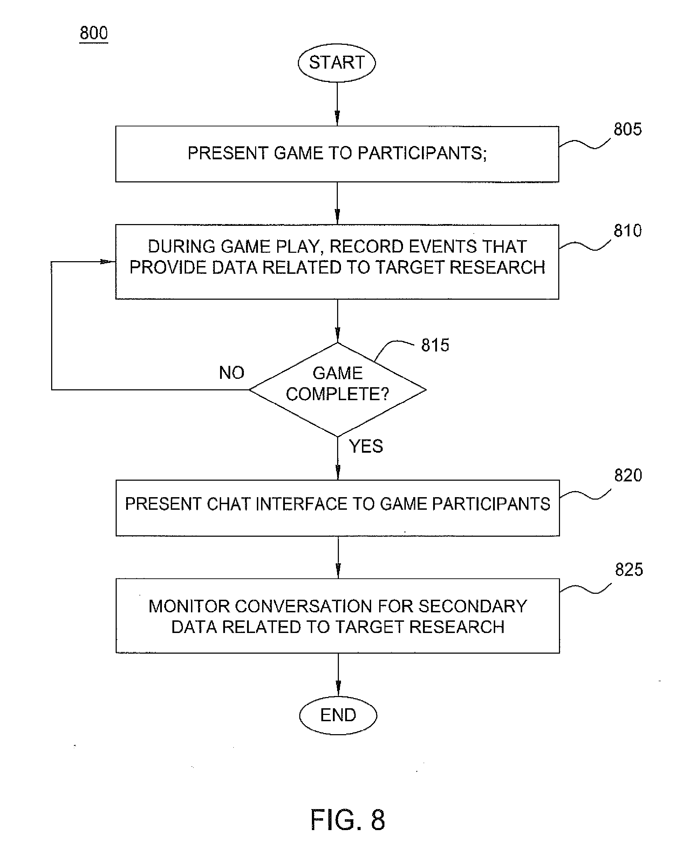

For example, the interface 700 of Figure 7 shows two text fields 710 used to specify alternatives for the game type of "consumer preference." In this specific, case, assume a research sponsor specifies two choices for an A/B test presented to game participants. And to play this game, a user selects which alternative they prefer along with a guess regarding what percentage of users will chose each alternative (revealing perceptions of consumer preferences). The user (or users) who correctly predict the percentage ratio could win the alternative that they chose (or other value). Examples of this game are given in Figures 8A-8C discussed below.

In addition to specifying the product alternatives for the "consumer preferences" game type, a research sponsor may also specify a name for a given instance of this game using text box 715 as well as store notes regarding a given game instance - allowing the sponsor to access this instance later as well as review all games created by a given sponsor. Similarly, the name may be used to identify the game data generated by individual participants during game play.

After supplying the information necessary to create a game of a given game (or research) type, the sponsor can publish the game using button 720. Continuing with the preferences example, the specified alternatives may be grouped with instances of this game type, allowing this instance of the "consumer preferences" game to be presented to participants. Once the preferences of a specified number of participants have been obtained (or after a prescribed time period), the results may be determined and a "winner" announced.

Figure 8 illustrates a method 800 for gathering market research data from game participants, according to one embodiment of the invention. The method 800 begins at step 805, where a game is presented to a participant. As described above, the game may be presented on a web browser as well as on specialized applications executing on mobile phones, tablet computers, and the like. At step 810, a participant engages in the appropriate game play for a given game. During game play, events that provide data related to target market research data are collected and sent to the game server. Game play continues until a given game is over (steps 810 and 815), according to the rules/mechanics of that particular game.

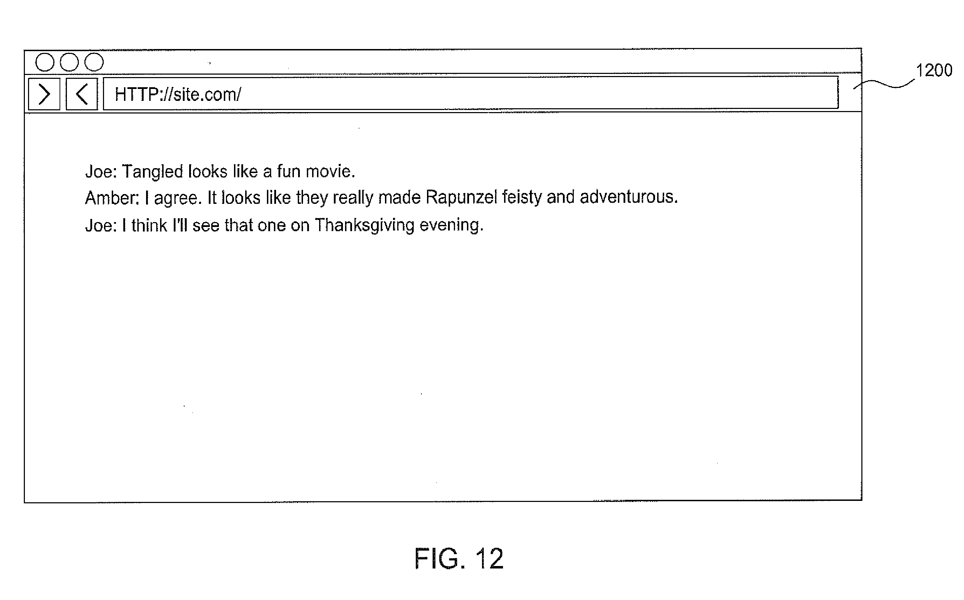

In one embodiment, game participants can chat with one another following a given game. For example, some games may allow two (or more) participants to engage in cooperative and/or competitive game mechanics. In such a case, at step 820, the participants are presented with a chat interface, allowing the participants to discuss the events of a particular game. At step 825, the chat interface may monitor the ensuing conversation of game participants to capture additional market research data related to game play events (and to the objects/subjects of the target market research). An example of such an interface is discussed below in reference to Figure 12.

Figures 9-12 illustrate a collection of game interfaces for a variety of different game mechanisms used to capture market research data from game participants. Of course, one of ordinary still in the art will recognize that the user interfaces shown in these figures provide example embodiments of an interface configured to capture market research data and that the example game interfaces may be modified in a variety of ways to add, remove, of combine user-interface elements as presented, or otherwise construct a game interface configured to provide game play mechanisms to participants.

Figures 9A-9C illustrate an example social game configured to gather both demographic and consumer preference data from game participants, according to one embodiment of the invention. The social game shown in Figures 9A-9C provides examples of the "consumer preferences" game discussed above. As shown in Figure 9A, a web page 900 presents a game interface that allows a user to select between two alternatives. In this example, the first alternative 905₁ is a fifty-dollar gift certificate for flowers, and the second alternative 905₂ is for a sixty-dollar gift certificate good towards dinner for two. A participant can make their selection by checking one of the checkboxes 910₁₋₂ and submit it using button 920. Additionally, text boxes 915 allow the playing participant to specify what percentage of other participants will select one alternative over the other. In addition to playing the game, one participant can recruit other players using link 925.

Figure 9B illustrates a second example of the "consumer preferences" game interface. In this example, a web page 930 shows a first alternative 935₁ is fifteen dollars in change and the second alternative 930₂ is for a ten-dollar bill. A participant can make their selection by checking one of the checkboxes 940₁₋₂ and submit it using button 945. Additionally, text boxes 940 allow the playing participant to specify what percentage of other participants will select one alternative over the other. This example illustrates that in addition to product preferences, this game can be used to measure other aspects of consumer behavior. Specifically, the choice of accepting a larger amount of change versus a single bill may be a good proxy for identifying participants who are more time sensitive than price sensitive.

Figure 9C illustrates another example of the "consumer preferences" game interface. In this example, a web page 955 shows a first alternative 960₁ of "diet" and the second alternative 960₂ of "regular." A participant can make their selection by checking one of the checkboxes 965₁₋₂ and submit it using button 965. Additionally, text boxes 970 allow the playing participant to specify what percentage of other participants will select one alternative over the other. This example illustrates that in addition to the direct information related to product preferences, this game can be used to build up a demographic profile for a given participant. Specifically, the choice presented in this example of the "consumer preferences" game may correlate to some degree to the gender of the playing participant. While not conclusive on its own, the latent signal in this choice may be combined with others to characterize the likelihood that a given participant has a given gender, age-range, location, education level or a variety of other demographic markers. Building a demographic profile of participants allows a provider of market research using the game platform described herein to offer more selective market research services to research sponsors. For example, research sponsors may be more interested in learning the awareness or consumer sentiment for their product relative to cohorts having a certain gender, age-range or other demographic marker.

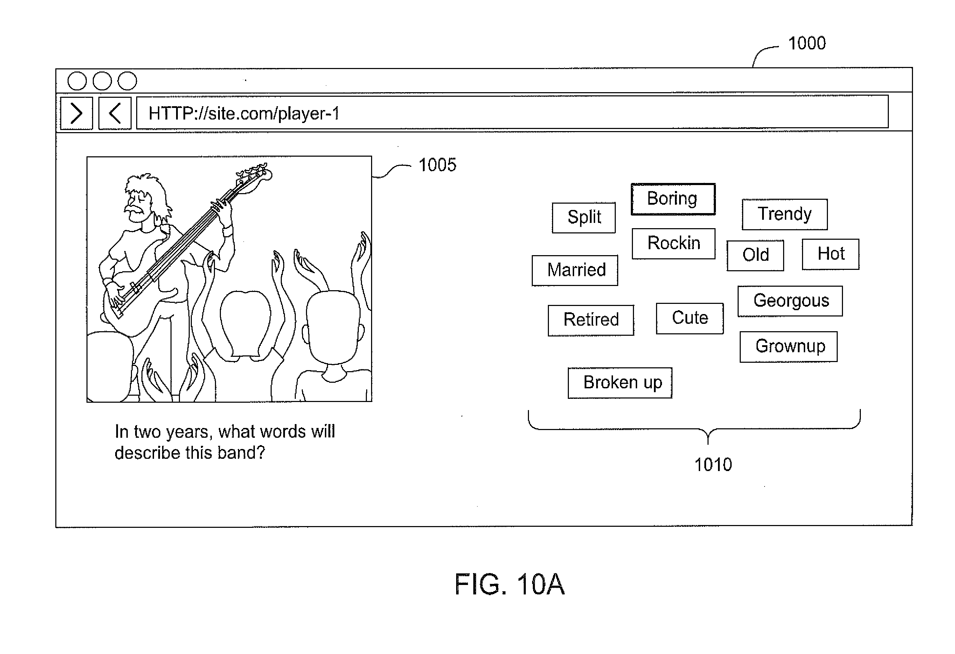

Figures 10A-10B illustrate an example social game configured to gather consumer preference, trending, and sentiment data from game participants, according to one embodiment of the invention. Unlike the example of Figures 9A-9C, the social game shown in Figure 10A is played by two participants. The interface shown in Figure 10A is presented to the first player. In this game, the first user is presented an image of a product, brand, celebrity, *etc*. In this particular example, a panel 1005 shows the first player an image of a popular music band and asked what words will best describe the group two years in the future. Along with the image, a set of word choices 1010 are available to the first user. The word choices 1010 provide a set of descriptors and concepts used to learn the consumer perceptions of the first user. Game play for this game includes the first user selecting the most appropriate set of keywords, based on their perception of the band shown in panel 1005. The selected concepts and/or descriptors are presented to the second user.

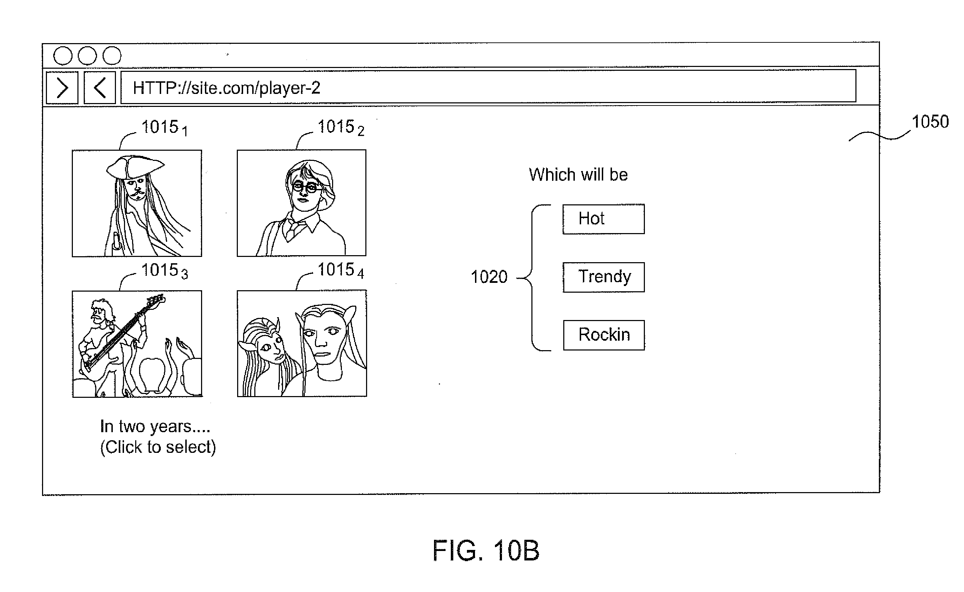

For example, Figure 10B shows an interface 1050 presented to the second user. As shown, the choices of descriptors and/or concepts made by the first user are presented to the second user (at 1020). However, in addition to the band presented to the first user, the interface 1050 also includes panels 1015₁₋₄, only one of which corresponds to the band shown to the first user. Game play proceeds where the second user selects which one of the panels 1015₁₋₄ the second user believes the selected words best correspond to. If the second user selects the same image presented to the first user, then the participants are considered to have "won" the game, and could be rewarded, *e.g.,* with a free mp3 download from the band (assuming the word choices indicated the first and second user liked this band, if not the users could be offered other value). Either way, the research sponsor is provided with a significant market research data regarding the consumer perceptions, preferences and/or awareness of the first and second user relative to the market research topic. Another variation of this game includes presenting both the first and second user with the same image panel (*e.g.,* the image of the band shown in the panel 1005 of Figure 10A) and the same collection of word choices. In such a case, game play could include each participant selecting a specified number of top choices. The more matching choices between the first and second participants, the higher the "score" for that round of the game.

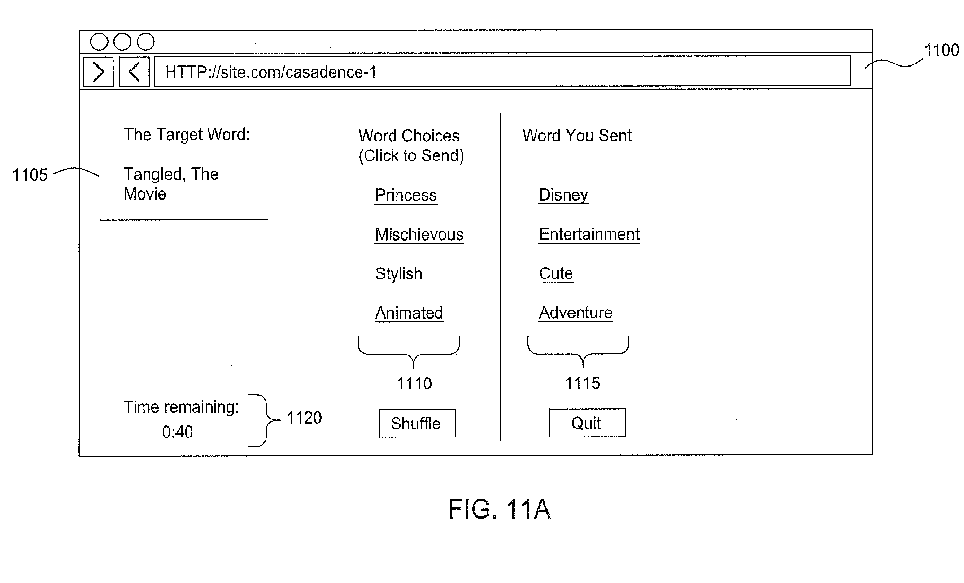

Figures 11A-11B illustrate another example social game configured to gather market research data regarding consumer sentiment, according to one embodiment of the invention. In this example game participants are randomly matched with one another (or matched based on friendship status on a social network site or matched on demographic characteristics). Matched participants play a guessing game with one another where one is given a secret keyword (*e.g.,* a product name or move title) and set of descriptors with concepts related to the keyword. The first player selects what descriptors or concepts to reveal to the second player, who in turn attempts to guess the keyword. The descriptors and concepts selected by the first user (as well as the guesses made by the second user) are used to derive measures of consumer opinion relative to a target product.

The interface 1100 shown in Figure 11A is presented to the first player. In this particular example, the first user is presented with the name of an animated feature and a set of keywords 1110. Game play includes the first user selecting which keywords to send to the second player. To send a keyword, the first player clicks on one of the keywords. In response, the interface 1100 removes the selected keyword from set 1100 and moves it to list 1115. In addition, the selected word appears on an interface presented to the second player, who attempts to guess the secret word supplied to the first player.

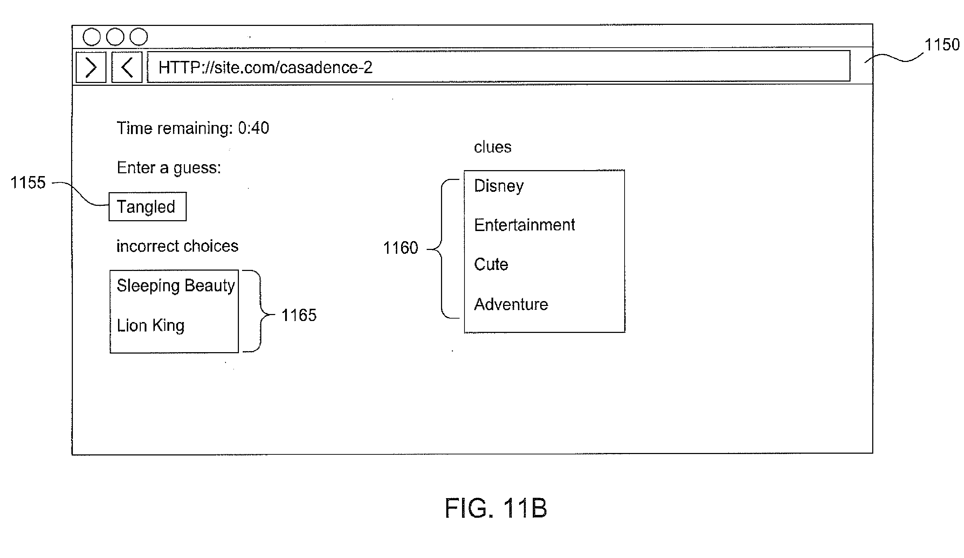

For example, Figure 11B shows an interface 1150 presented to the second user. As shown, the choices of descriptors and/or concepts made by the first user are presented to the second user (at 1160). Additionally, a text box 1155 allows the second user to guess the secret keyword, based on the concepts and/or descriptors selected by the first user. Incorrect guesses are shown at 1165.

Game play proceeds where the second user enters guesses until time runs out or correctly guesses the keyword presented to the first user. If the second player guesses correctly, the participants are considered to have "won" the game, and could be rewarded, *e.g.,* with a discount movie passes, assuming the word choices indicated the first and were interested in seeing this particular movie. If not the users could be offered other value. At the same time, the word choices selected by the first user (as well as the guess made by the second user relative to a growing set of concepts and or descriptors) provide valuable market research data to a research sponsor (*e.g.,* in this case, the motion picture studio producing and marketing the animated film).

In cases where the second user fails to guess the keyword, the second player could be prompted to indicate what keywords would have "given it away." The first user could also be prompted to indicate which keywords they would have most wanted to have available. Doing so provides an additional source of market research data. In one embodiment, the responses could be used to update the word choices made to available to the first player.

Further, after completing a round of this game, the first and second user could interact via a chat room. In such a case, any conversation between the participants about the target product, or the concepts and descriptors, could be mined as a secondary source of market research data. For example, Figure 12 illustrates an interface 1200 used to gather market research data from game participants, according to one embodiment of the invention. As shown, the interface 1200 allows the first and second player to discuss the last round of game play. In this particular example, elements of the conversation related to the animated motion picture provide an additional source of market research data to the film studio.

While the exemplary embodiments shown in Figure 9-12 present a variety of user interfaces and game types for conducting market research using social network games, the interfaces illustrated in these Figures provide examples of an approach for conducting market research that could be adapted for a broad variety of market research subjects or topics, as well as adapted for a broad variety of game types or game play mechanics. This approach presents an engaging experience to game participants, while simultaneously allowing a market research sponsor to rapidly gather market research data. Advantageously, providing a more engaging experience in this manner may provide an element of situational distraction, leading to more authentic responses from the participants. Further, by providing games through social network websites (and applications used to access such online social networks), participants may be recruited by the users of such networks.

While the forgoing is directed to embodiments of the present disclosure, other and further embodiments of the disclosure may be devised without departing from the basic scope thereof. For example, aspects of the present disclosure may be implemented in hardware or software or in a combination of hardware and software. One embodiment of the disclosure may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (*e.g.,* read-only memory devices within a computer such as CD-ROM disks readable by a CD-ROM drive, flash memory, ROM chips or any type of solid-state non-volatile semiconductor memory) on which information is permanently stored; and (ii) writable storage media (*e*.*g*., floppy disks within a diskette drive or hard-disk drive or any type of solid-state random-access semiconductor memory) on which alterable information is stored. Such computer-readable storage media, when carrying computer-readable instructions that direct the functions of the present disclosure, are embodiments of the present disclosure.

In view of the foregoing, the scope of the present disclosure is determined by the claims that follow.

## Claims

1. A computer-implemented method for generating playable games used to obtain market research data, the method comprising:
receiving a selection of a game type to use in conducting market research;
receiving a set of data used to customize the selected game type in order to conduct market research for a market research topic identified in the received set of data;
generating, from the received data, a playable game of the selected game type, wherein the game type includes one or more game play elements configured to elicit game play events relevant to the market research data from one or more game participants during game play; and
publishing the playable game to a network accessible location.

2. The method of claim 1, further comprising, evaluating the relevant game play events elicited during game play to derive at least one of a measure of consumer product awareness, consumer sentiment, brand preferences, loyalty, purchasing behavior, purchasing intent, and trends for the market research topic identified in the received set of data.

3. The method of claim 1 or 2, further comprising:
receiving, from at least a first participant, a request to play the playable game;
providing, to the first participant, an instance of the playable game;
recording game play events elicited during game play relevant to the market research data; and
interpreting the recorded game play events play events to derive the market research data.

4. The method of claim 3, wherein the game play includes at least the first participant and a second participant, and further comprising:
following game play, presenting the first and second participants with a chat interface; and
monitoring a conversation between the first and second participants to gather additional data relative to the market research topic identified in the received set of data.

5. The method of any one of claims 1 to 4, further comprising:
evaluating the market research data elicited from the first participant to derive a demographic profile or a psychographic profile to associate with the first participant.

6. The method of any one of the preceding claims, wherein publishing the playable game to a network accessible location comprises publishing a mobile device application to be installed on mobile devices.

7. A system, comprising:
a memory; and
a processor storing a game platform application, which, when executed on the processor, perform an operation for generating playable games used to obtain market research data, the operation comprising:
receiving a selection of a game type to use in conducting market research,
receiving a set of data used to customize the selected game type in order to conduct market research for a market research topic identified in the received set of data,
generating, from the received data, a playable game of the selected game type, wherein the game type includes one or more game play elements configured to elicit game play events relevant to the market research data from one or more game participants during game play, and
publishing the playable game to a network accessible location.

8. The system of claim 7, wherein the operation further comprises, evaluating the relevant game play events elicited during game play to derive at least one of a measure of consumer product awareness, consumer sentiment, brand preferences, loyalty, purchasing behavior, purchasing intent, and trends for the market research topic identified in the received set of data.

9. The system of claim 7 or 8, wherein the operation further comprises:
receiving, from at least a first participant, a request to play the playable game;
providing, to the first participant, an instance of the playable game;
recording game play events elicited during game play relevant to the market research data; and
interpreting the recorded game play events play events to derive the market research data.

10. The system of claim 9, wherein the game play includes at least the first participant and a second participant, and wherein the operation further comprises:
following game play, presenting the first and second participants with a chat interface; and
monitoring a conversation between the first and second participants to gather additional data relative to the market research topic identified in the received set of data.

11. The system of any one of claims 7 to 10, wherein the operation further comprises:
evaluating the market research data elicited from the first participant to derive a demographic profile or a psychographic profile to associate with the first participant.

12. A computer implemented method of conducting market research via a game played by a group of game participants, the method comprising:
receiving, from a first participant of the group, a request to play the game, wherein the game presents the first participant with at least two alternatives, and wherein game play includes the first participant indicating a preferred one of the two or more alternatives and a prediction of a percentage of participants that will chose each alternative;
generating an instance of the game, wherein the alternatives are selected for the instance in order to elicit game play events relevant to the market research data during game play based on the alternatives selected by the first participant and based on the predicted percentages;
providing, to the first participant, the instance of the game; and
recording the game play events relevant to the market research data elicited from the first participant during game play.

13. A computer implemented method of obtaining market research data via a game played by a group of game participants, the method comprising:
receiving, from at least a first participant of the group, a request to play the game;
generating an instance of the game, wherein the instance includes at least a first interface and a second interface and wherein the instance of the game is configured to elicit game play events relevant to the market research data during game play from the first and second participants;
outputting the first interface for display to the first participant, wherein the first interface includes at least:
an indication of a game subject for the game instance,
a plurality of keywords representing concepts and descriptors, and
a control element which allows the first participant to share selected keywords, of the plurality, with the second participant;
outputting the second interface for display to the second participant,
wherein the second interface includes at least:
a panel used to display the selected keywords shared by the first participant, and
a control element which allows the second participant to guess the game subject;
during game play, recording the selected keywords shared by the first participant and one or more guesses of the game subject made by the second participant.

14. A system, comprising:
a memory; and
a processor storing a game platform application, which, when executed on the processor, perform an operation for generating games used to obtain market research data, the operation comprising:
receiving, from a first participant of the group, a request to play the game, wherein the game presents the first participant with at least two alternatives, and wherein game play includes the first participant indicating a preferred one of the two or more alternatives and a prediction of a percentage of participants that will chose each alternative,
generating an instance of the game, wherein the alternatives are selected for the instance in order to elicit game play events relevant to the market research data during game play based on the alternatives selected by the first participant and based on the predicted percentages,
providing, to the first participant, the instance of the game, and
recording the game play events relevant to the market research data elicited from the first participant during game play.

15. A system, comprising:
a memory; and
a processor storing a game platform application, which, when executed on the processor, perform an operation for generating games used to obtain market research data, the operation comprising:
receiving, from at least a first participant of the group, a request to play the game;
generating an instance of the game, wherein the instance includes at least a first interface and a second interface and wherein the instance of the game is configured to elicit market research data from the first participant and from a second participant during game play,
outputting the first interface for display to the first participant, wherein the first interface includes at least:
an indication of a game subject for the game instance;
a plurality of keywords representing concepts and descriptors; and
a control element which allows the first participant to share selected keywords, of the plurality, with the second participant,
outputting the second interface for display to the second participant, wherein the second interface includes at least:
a panel used to display the selected keywords shared by the first participant; and
a control element which allows the second participant to guess the game subject,
during game play, recording the selected keywords shared by the first participant and one or more guesses of the game subject made by the second participant.
